# EUROPEAN PATENT APPLICATION

(11) **EP 3 511 094 A1**
(43) Date of publication of application: **17.07.2019**
(21) Application number: 18213904.8
(22) Date of filing: 19.12.2018
(51) Int. Cl.: B22F 3/105, B33Y 10/00, B33Y 30/00, B22F 3/00

(54) **LARGE-SCALE BINDER JET ADDITIVE MANUFACTURING SYSTEM AND METHOD**

(30) Priority: 12.01.2018 US 201815870235
(71) Applicant: General Electric Company, Schenectady, NY 12345 (US)
(72) Inventor: BONILLA GONZALEZ, Carlos, West Chester, OH Ohio 45069-3807 (US); BROMBERG, Vadim, Niskayuna, NY New York 12309-1027 (US); PANCZYK, Christopher A., West Chester, OH Ohio 45069-3807 (US); NATARAJAN, Arunkumar, Cincinnati, OH Ohio 45069 (US); FAIDI, Waseem, Niskayuna, NY New York 12309 (US); CARTER, William Thomas, Niskayuna, NY New York 12309 (US)
(74) Representative: Hafner & Kohl

(57) **Abstract**

The subject matter disclosed herein relates to additive manufacturing techniques, and more specifically, to additive manufacturing techniques that involve binder jet printing.
An additive manufacturing system (10) for fabricating an article (22) includes a build unit (20) and a positioning system (18) operably coupled to the build unit, wherein the positioning system is configured to move the build unit in at least three dimensions. The build unit includes a recoater portion (42) configured to deposit a layer of powder (50) within a build area of the additive manufacturing system. The build unit also includes a binder jetting (BJ) portion (46) configured to selectively deposit and cure a binder (48) within a periphery (140) of the deposited layer of powder to form a dynamic build envelope (24) around the article being fabricated.

## Description

### BACKGROUND

The subject matter disclosed herein relates to additive manufacturing techniques, and more specifically, to additive manufacturing techniques that involve binder jetting. Additive manufacturing (AM), also known as 3D printing, generally refers to a number of different techniques for fabricating an article one layer at a time. In contrast to subtractive manufacturing methods, AM generally involves the buildup of one or more materials to make a net or near net shape (NNS) article. For example, certain AM techniques involve successively depositing layers of powder (e.g., a metal, ceramic, or plastic powder), and then selectively bonding portions of the layers of powder to form the desired article. AM can be used to fabricate various articles (e.g., fuel nozzles, fuel injectors, turbine blades) from computer aided design (CAD) models. As such, AM generally facilitates the creation of complex articles and enables flexibility for the customization of articles compared to other manufacturing techniques, such as cast molding or injection molding. Accordingly, AM can reduce the overall manufacturing costs associated with generating these complex articles, as compared to other manufacturing techniques.

Different AM techniques melt, sinter, or chemically bind the layers of powder to generate the desired article. Examples of AM techniques include: direct laser melting (DLM), direct laser sintering (DLS), and binder jetting (BJ). For DLM and DLS, portions of the layers ofpowder are selectively melted or sintered together to form the article. Sintering entails fusing (agglomerating) particles of a powder at a temperature below the melting point of the powder material, whereas melting entails fully melting particles of a powder to form a consolidated article that is a solid homogeneous mass. In contrast, for BJ, a binder is selectively deposited to temporarily chemically bind portions of the layers of powder together to form a green body article. After curing, the green body article may be pre-sintered to form a brown body article having substantially all of the binder removed, and fully sintered to form a consolidated article.

### BRIEF DESCRIPTION

In one embodiment, an additive manufacturing system for fabricating an article includes a build unit and a positioning system operably coupled to the build unit. The positioning system is configured to move the build unit in at least three dimensions. The build unit includes a recoater portion configured to deposit a layer of powder within a build area of the additive manufacturing system. The build unit also includes a binder jetting portion configured to selectively deposit and cure a binder within a periphery of the deposited layer of powder to form a dynamic build envelope around the article being fabricated in the build area.

In another embodiment, a method of additive manufacturing includes moving, via a positioning system, a build unit across a build area. The method includes depositing, via a recoater portion of the build unit, a layer of powder while moving the build unit across the build area. The method also includes selectively depositing, via a binder jetting portion of the build unit, a binder onto a periphery of the layer of powder while moving the build unit across the build area, wherein the binder is subsequently cured to form a portion of a dynamic build envelope at the periphery of the layer of powder. The method further includes fusing or binding a portion of the layer of powder to form a fused or bound layer of an article inside of the dynamic build envelope while moving the build unit across the build area.

In another embodiment, a build unit of an additive manufacturing system for fabricating an article includes a recoater portion configured to deposit a layer of powder within a build area of the additive manufacturing system. The system also includes a binder jetting portion configured to selectively deposit and cure a binder within a periphery of the deposited layer of powder to form a dynamic build envelope around the article being fabricated in the build area. The system further includes a direct laser melting or direct laser sintering (DLM/DLS) portion configured to selectively fuse a portion of the deposited layer of powder to form a fused layer of the article inside of the dynamic build envelope.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram of an embodiment of an additive manufacturing (AM) system, including a positioning system and a build unit, that is fabricating an article within a dynamic build envelope, in accordance with present techniques;
FIG. 2 is a schematic diagram of an embodiment of the build unit of the AM system, wherein the build unit includes a recoater portion, a binder jetting (BJ) portion, and a direct laser melting/direct laser sintering (DLM/DLS) portion, in accordance with present techniques;
FIG. 3 is a schematic diagram of a top view of another embodiment of the build unit of the AM system, in accordance with present techniques;
FIG. 4 is a schematic diagram of a top view of another embodiment of the recoater portion of the build unit of the AM system as it is used to fabricate an article within a dynamic build envelope, in accordance with present techniques;
FIG. 5 is a cross-sectional diagram of an embodiment of a dynamic build envelope that is fabricated using BJ, in accordance with present techniques;
FIGS. 6A, 6B, 6C, and 6D illustrate steps of a process for fabricating the dynamic build envelope using BJ, in accordance with present techniques; and
FIGS. 7A, 7B, and 7C illustrate steps of a process for fabricating the article using BJ or DLM/DLS, while fabricating the dynamic build envelope around the article using BJ, in accordance with present techniques.

### DETAILED DESCRIPTION

Though "additive manufacturing" is an industry standard term (ASTM F2792), AM encompasses various manufacturing and prototyping techniques known under a variety of names, such as freeform fabrication, 3D printing, and rapid prototyping/tooling. As mentioned, certain AM processes, such as DLM and DLS (hereinafter collectively referred to as "DLM/DLS"), involve directing an energy beam (e.g., an electron beam, a laser beam) to selectively melt or sinter portions of deposited layers of a powder material to form a solid, three-dimensional article. The physical processes associated with laser sintering or laser melting include heat transfer to a powder material and then either sintering or melting the powder material. Although the laser sintering and melting processes can be applied to a broad range of powder materials, the scientific and technical aspects of the production route (e.g., sintering or melting rate and the effects of processing parameters on the microstructural evolution during the layer manufacturing process) are not well-understood. These methods of fabrication are accompanied by multiple modes of heat, mass and momentum transfer, and chemical reactions that make DLM/DLS very complex. Additionally, when temporary structures, such as retaining walls, are produced using DLM/DLS, they are formed as consolidated, 3D structures. Since these temporary structures are constructed of irreversibly bound powdered material that cannot be easily recycled, it is recognized that constructing these temporary structures using DLM/DLS reduces the efficiency and increases the cost of the AM operation.

With the foregoing in mind, present embodiments are directed toward AM systems that utilize BJ to enable fabrication of large-scale articles, such as 1 cubic meter (m³) in size, or larger. The disclosed AM systems enable the fabrication of larger articles by using BJ to at least fabricate retaining walls around the article as it is printed. As discussed below, BJ can be used to form robust retaining walls that define a dynamic build envelope around the article to retain deposited layers of powder around the article during the build process. As discussed, BJ also enables the deposition of a sufficient volume of binder to selectively oversaturate the periphery of the deposited layers of powder to improve adhesion of subsequently deposited layers of powder, which prevents a substantial quantity of powder from slipping over the retaining wall and falling outside of the dynamic build envelope. The article is fabricated inside the dynamic build envelope by selectively melting portions of the powder via DLM/DLS, or selectively binding portions of the powder via BJ, or a combination thereof. Accordingly, once fabrication of the article is completed, the retaining walls of the dynamic build envelope can undergo a debinding heat treatment to remove the binder and free the powder for recycling in a subsequent AM operation. As such, the disclosed AM systems enable higher efficiency, reduced waste, and greater freedom to utilize particular AM processes to construct different portions of the article.

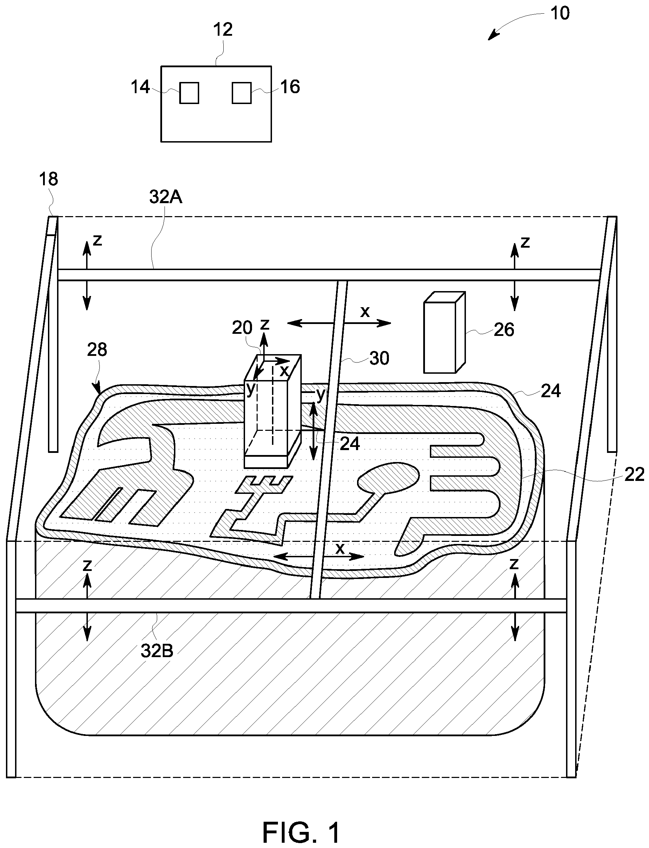

FIG. 1 illustrates an example embodiment of a large-scale additive manufacturing (AM) system 10, in accordance with the present technique. The AM system 10 includes a controller 12 having memory circuitry 14 that stores instructions and processing circuitry 16 configured to execute these instructions to control the various components of the AM system 10. The AM system 10 further includes a positioning system 18, a build unit 20, and a build plate (not shown in this view) beneath an article 22 being built. As discussed below, the build unit 20 includes a BJ portion that is capable of selectively depositing a binder to fabricate at least the dynamic build envelope 24 around the article 22 being built. In certain embodiments, the build unit 20 is also configured to use BJ to fabricate at least a portion of the article 22 within the dynamic build envelope 24. Additionally or alternatively, in certain embodiments, the build unit 20, or a second build unit of the AM system 10 (e.g., build unit 26), is configured to use DLM/DLS to fabricate at least a portion of the article 22 within the dynamic build envelope. In certain embodiments, both the build unit 20 and the build unit 26 may be moved and positioned by the same positioning system 18, or by a separate positioning system.

In contrast with conventional AM systems, for the embodiment illustrated in FIG. 1, a maximum potential build area is defined by the positioning system 18 instead of by the dimensions of a predefined powder bed. For the illustrated embodiment, the build area 28 of a particular build can be confined by the build envelope 24 that is dynamically built up around the article 22 using a BJ process, while the article itself is built using a BJ process, a DLM/DLS process, or a combination thereof. For the illustrated embodiment, the positioning system 18 has an x crossbeam 30 that moves the build unit 20 in the x direction. There are two z crossbeams 32A and 32B that move the build unit 20 and the x crossbeam 30 in the z direction. The x cross beam 30 and the build unit 20 are attached by a mechanism 34 that move the build unit 20 in the y direction. While, for the illustrated embodiment, the positioning system 18 is illustrated as a gantry, in other embodiments, different positioning systems may be used. For example, the positioning system 18 may be any multidimensional positioning system, such as a delta robot, cable robot, robot arm, or another suitable positioning system.

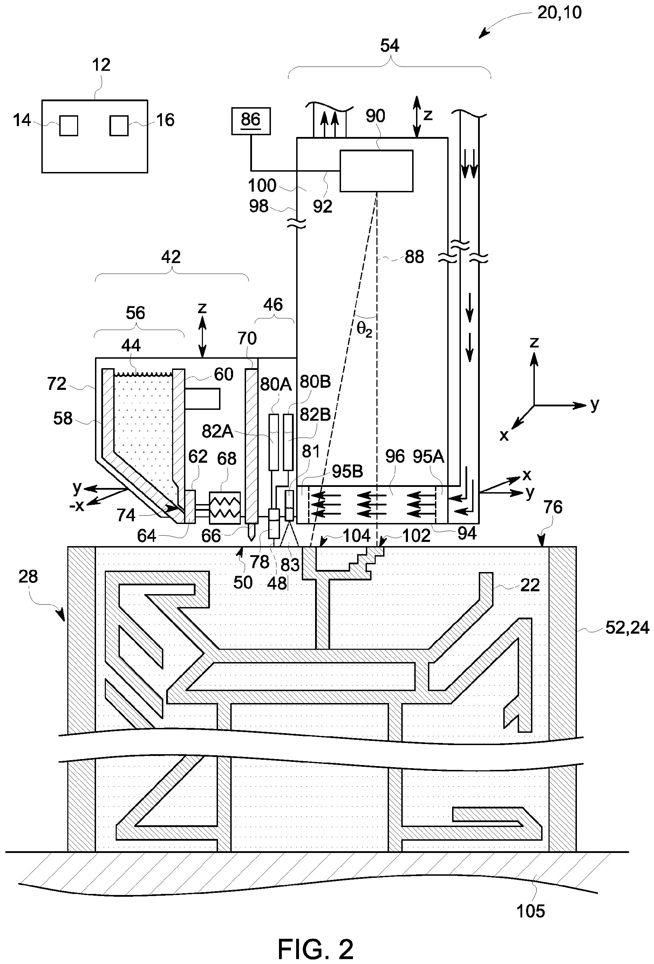

FIG. 2 illustrates an embodiment of the build unit 20 of the AM system 10, wherein the build unit 20 is configured for both BJ and DLM/DLS, in accordance with present techniques. In particular, the build unit 20 illustrated in FIG. 2 includes a recoater portion 42 configured to deposit powder 44 in the build area 28. The illustrated build unit 20 also includes a BJ portion 46 configured to selectively deposit a binder 48 on to the surface of a deposited layer 50 of powder to construct at least the retaining walls 52 that form the dynamic build envelope 24 around the article 22 being fabricated. The illustrated build unit 20 further includes a DLM/DLS portion 54 configured to construct at least a portion of the article 22 within the dynamic build envelope 24 by directly melting or sintering the deposited layer 50 of powder. As mentioned above, the controller 12 provides suitable control signals to the recoater portion 42, the BJ portion 46, and the DLM/DLS portion 54 of the build unit 20 to provide the functionality described herein. In other embodiments, a build unit 20 of the AM system 10 may only include the recoater portion 42 and the BJ portion 46, and this build unit 20 may be used to fabricate both the dynamic build envelope 24 and the article 22. In still other embodiments, a first build unit 20 of the AM system 10 includes a first recoater portion 42 and a BJ portion 46 and is used to fabricate the dynamic build envelope 24, and a second build unit 20 of the AM system 10 includes a second recoater portion 42 and a DLM/DLS portion 54 that is used to fabricate the article 22 inside of the build envelope 24.

For the illustrated embodiment, the recoater portion 42 has a hopper 56 comprising a back plate 58 and a front plate 60. The recoater portion 42 also has at least one actuating element 62, at least one gate plate 64, a recoater blade 66, an actuator 68, and a recoater arm 70. The illustrated recoater portion 42 is mounted to a mounting plate 72. In this particular embodiment, the actuator 68 activates the actuating element 62 in response to signals from the controller 12 to pull the gate plate 64 away from the front plate 60. In an embodiment, the actuator 68 may be, for example, a pneumatic actuator, and the actuating element 62 may be a bidirectional valve. In an embodiment, the actuator 68 may be, for example, a voice coil, and the actuating element 62 may be a spring. In certain embodiments, the powder 44, the back plate 58, the front plate 60, and the gate plate 64 may all be made of the same material. Alternatively, the back plate 58, the front plate 60, and the gate plate 64 may all be the same material, and that material may be one that is compatible with the powder 44, such as cobalt-chrome.

The gate plate 64 of the recoater portion 42 in FIG. 2 is illustrated in a closed position. In an open position (not shown), a gap 74 opens between the front plate 60 and the back plate 58 that allows powder 44 to flow from the hopper 56 when a corresponding gate plate 64 is pulled away by the actuating element 62. As such, when the gate plate 64 of the recoater portion 42 is in the open position, powder 44 in the hopper 56 is deposited to make a fresh layer 50 of powder that is smoothed over by the recoater blade 66 to make a substantially even powder layer at the working surface 76 of the build. In some embodiments, portions of the substantially even powder layer 50 may be adhered together using binder in a BJ process, or melted/sintered in a DLM/DLS process, at the same time that the build unit 20 is moving across the working surface 76, which enables continuous operation of the build unit 20 and faster production of both the dynamic build envelope 24 and the article 22. In certain embodiments, instead of the recoater blade 66, the recoater portion 42 may include a counter-rotating roller to smooth the fresh layer 50 ofpowder and form the working surface 76 of the build before selectively binding together portions the deposited layer.

The BJ portion 46 of the illustrated build unit 20 includes a print head 78 that is fluidly coupled to one or more binder reservoirs 80 (e.g., binder reservoirs 80A and 80B) and is disposed adjacent to a curing emission source 81. The print head 78 is configured to receive a supply of liquid binder 82 (e.g., binder 82A, binder 82B, or a combination thereof) from the binder reservoirs 80, and to selectively deposit the liquid binder(s) 82 onto the working surface 76 of the powder deposited by the recoater portion 42, in response to signals provided by the controller 12. The curing emission source 81 is a light source, such as, for example, an infrared (IR) lamp, an ultraviolet (UV) lamp, or a UV laser. For the illustrated embodiment, the curing emission source 81 is activated (e.g., continuously or in response to signals from the controller 12) to irradiate a portion of the working surface 76 with light 83 to cure the binder(s) 82 after being deposited by the print head 78.

The DLM/DLS portion 54 of the illustrated build unit 20 includes a laser irradiation source 86 that emits an energy beam 88 of photons that is directed by the irradiation emission directing device 90. The laser irradiation may be transported to the irradiation emission directing device by any suitable means, for example, a fiber-optic cable 92. The DLM/DLS portion 54 also includes a gas flow device 94 having a pressurized outlet portion 95A and a vacuum inlet portion 95B, which provides gas flow to a gas flow zone 96. Above the gas flow zone 96, there is an enclosure 98 containing an inert environment 100. For the illustrated embodiment, the gas flow in the gas flow zone 96 flows in the y direction, while other directions may be possible in other embodiments. The gas flow in the gas flow zone 96 may be substantially laminar.

When the irradiation source 86 of the DLM/DLS portion 54 of the build unit 20 is a laser source, then the irradiation emission directing device 90 may be, for example, a galvo scanner, and the irradiation source 86 may be located outside the build environment. When the irradiation source 90 is an electron source, then the electron source originates electrons that comprise an energy beam 88 of electrons (i.e., an e-beam) that is directed by the irradiation emission directing device 90. When the irradiation source 86 is an electron source, then the irradiation emission directing device 90 may be, for example, a deflecting coil. When the irradiation source 86 is a laser source, the DLM/DLS portion 54 of the build unit 20 includes a gas flow device 94 that provides a substantially laminar gas flow to a gas flow zone 96 illustrated in FIG. 2 during operation. When the irradiation source 86 is an electron source, then a vacuum may be maintained in the space through which the e-beam 88 passes, in lieu of the gas flow zone 96. Additionally, in certain embodiments, the irradiation emission directing device 90 may be independently movable within the enclosure 98 by a second positioning system (not shown).

For the DLM/DLS portion 54 of the illustrated embodiment of the build unit 20 illustrated in FIG. 2, because the build unit 20 can be moved to a new location to build another portion of the article 22 being fabricated, the maximum angle of the beam directed by the irradiation emission directing device 90 (indicated as θ₂ in FIG. 2) can be relatively small, even when fabricating a large article 22. The direction of the energy beam 88 when θ₂ is approximately 0 defines the z direction in this view. When the build unit 20 is stationary, the point 102 on the working surface 76 that the energy beam touches when θ₂ is 0 defines the center of a circle in the xy plane, and the most distant point 104 from the center of the circle where the energy beam touches the working surface 76 defines a point on the outer perimeter of the circle. This circle defines the scan area of the beam 88, which may be smaller than the smallest cross sectional area of the article 22 being formed (in the same plane as the scan area of the beam 88). Accordingly, there is no particular upper limit on the size of the article 22 relative to the scan area of the beam 88. Additionally, it may be noted that, for certain embodiments of the build unit 20 that include both the BJ portion 46 and the DLM/DLS portion 54, the irradiation emission directing device 90 may be controlled to provide lower power (e.g., more diffuse, lower intensity) radiation suitable to cure binder deposited by the print head 78 of the BJ portion 42 of the build unit 20 without substantially melting or sintering the irradiated portion of the power. Accordingly, such embodiments may lack a separate curing emission source 81 in the BJ portion 46 of the build unit 20, advantageously reducing the complexity and cost of the build unit 20.

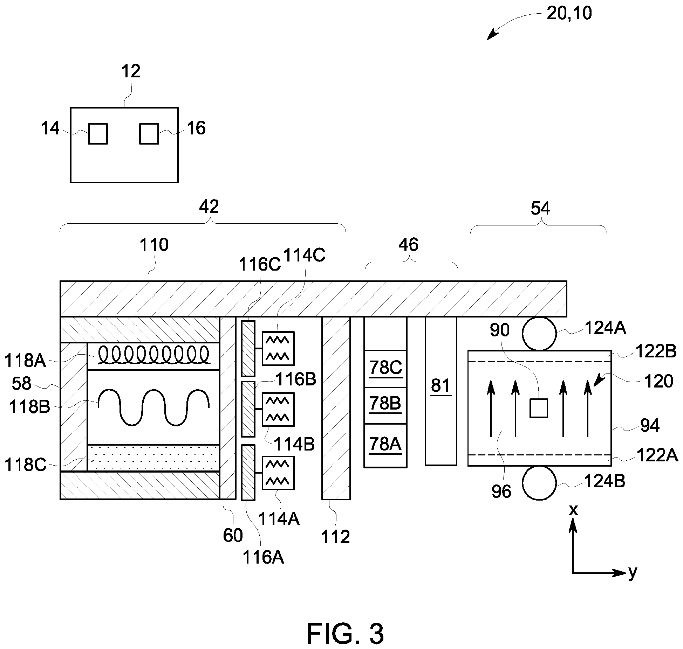

FIG. 3 illustrates a top down view of another embodiment of the build unit 20 of the AM system 10. The build unit 20 illustrated in FIG. 3 includes the recoater portion 42, the BJ portion 46, and the DLM/DLS portion 54, which are all coupled to an attachment plate 110 of the build unit 20. The recoater portion 42 includes a recoater arm 112, actuating elements 114A, 114B, and 114C, and gate plates 116A, 116B, and 116C. The recoater portion 42 also includes the hopper 56 having the back plate 58 and front plate 60. For the illustrated embodiment, the hopper 56 is divided into three separate compartments containing three different powders 118A, 118B, and 118C, as discussed below.

The BJ portion 46 ofthe illustrated embodiment of the build unit 20 includes a plurality of print heads 78, including print head 78A, 78B, and 78C. As discussed above, the print heads 78 are fluidly coupled to at least one binder reservoir 80 (not shown). In certain embodiments, at least one of the print heads 78A, 78B, 78C may be coupled to a different binder reservoir, and may receive and selectively deposit a different binder (relative to the other print heads 78) onto the working surface 76 in response to signals from the controller 12. The print heads 78 are disposed adjacent to the curing emission source 81, as discussed above, which is activated to irradiate a portion of the working surface 76 to cure binder deposited by the print heads 78 and fabricate at least the dynamic build envelope 24 as the article 22 is being built.

The DLM/DLS portion 54 of the illustrated embodiment of the build unit 20 includes the irradiation emission directing device 90 and the gas flow device 94. As discussed, the gas flow device 94 enables a low-oxygen atmosphere 120 (e.g., inert atmosphere, vacuum) to enable DLM/DLS. The illustrated gas flow device 94 has a gas outlet portion 122A and a gas inlet portion 122B, such that there is laminar gas flow in a gas flow zone 96 within the gas flow device 94. Conduits 124A and 124B feed gas into and out of the illustrated gas flow device 94.

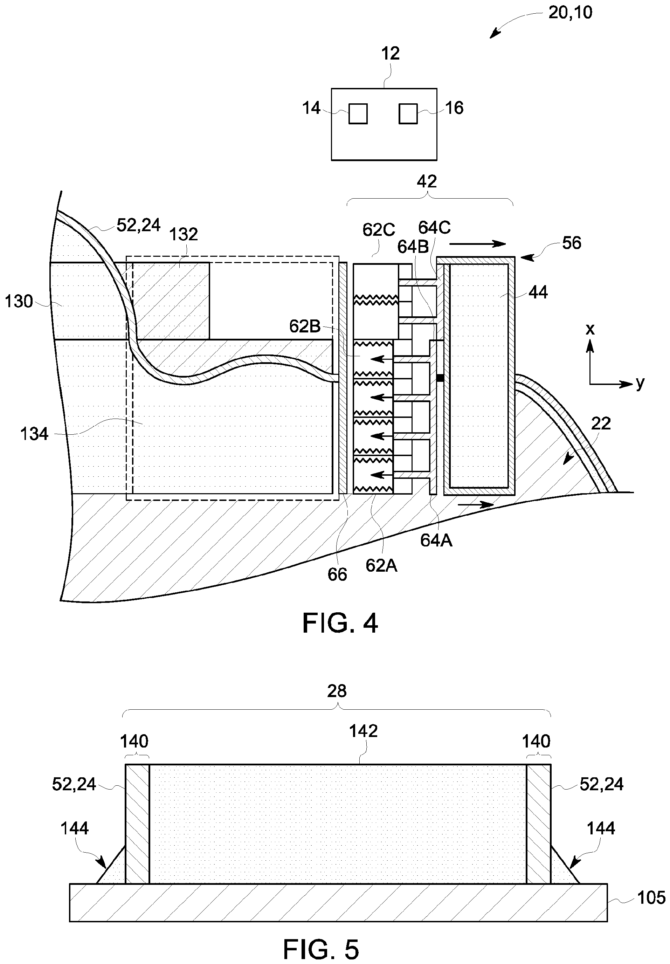

FIG. 4 shows a top down view of the recoater portion 42 of an embodiment of the build unit 20 of an AM system 10 as it is fabricating the retaining wall 52 of the dynamic build envelope 24 around an article 22 being formed. More specifically, the recoater portion 42 is configured for selective recoating, in accordance with embodiments of the present technique. For the illustrated embodiment, the recoater portion 42 has the hopper 56 with only a single compartment containing powder 44. Three gate plates 64A, 64B, and 64C of the illustrated recoater portion 42 are controlled by three actuating elements 62A, 62B, and 62C, in accordance with control signals from the communicatively coupled controller 12. When the recoater portion 42 passes over a region that is within the retaining wall 52 of the dynamic build envelope 24, such as in the region 130, the corresponding gate plate 64C may be held open to deposit powder 44 in the region 130. When the recoater portion 42 passes over a region that is outside of the retaining wall 52, such as the region 132, the corresponding gate plate 64C is closed by its corresponding actuating element 62C, to avoid depositing powder 44 outside of the dynamic build envelope 24, which could potentially waste the powder 44. Accordingly, inside of the dynamic build envelope 24, the recoater portion 42 selectively deposits discrete lines of powder 44, as indicated by element 134. As discussed, the recoater blade 66 or a counter-rotating recoater roller smooths out the powder deposited.

The selective recoater portion 42 advantageously enables precise control of powder deposition using powder deposition device (e.g. a hopper) with independently controllable powder gates as illustrated, for example, in FIGS. 3 and 4. The powder gates are controlled by at least one actuating element which may be, for instance, a bidirectional valve or a spring (e.g., element 62 of FIG. 2). Each powder gate can be opened and closed for particular periods of time, in particular patterns, to finely control the location and quantity of powder deposition, as illustrated in FIG. 3. The hopper may contain dividing walls so that it comprises multiple chambers, each chamber corresponding to a powder gate, and each chamber containing a particular powder material, as illustrated in FIG. 3. The powder 44 in the separate chambers may be the same, or may be different, in certain embodiments. Advantageously, each powder gate can be made relatively small so that control over the powder deposition is suitable fine. Each powder gate has a width that may be, for example, no greater than about 2 inches, or no greater than about 1/4 inch. In general, the smaller the powder gate, the greater the powder deposition resolution. In certain embodiments, the sum of the widths of all powder gates may be smaller than the largest width of the article. Advantageously, in certain embodiments, a powder gate may be a simple on/off powder gate mechanism, which may be less prone to malfunctioning. Such an on/off powder gate mechanism also advantageously permits the powder 44 to come into contact with fewer parts, which reduces the possibility of contamination. Advantageously, the disclosed recoater can be used to build a much larger article.

For example, the largest xy cross sectional area of the recoater portion 42 may be smaller than the smallest cross sectional area of the article 22, and there is no particular upper limit on the size of the article relative to the size of the recoater portion. Likewise, the width of the recoater blade 66 may smaller than the smallest width of the article 22, and there is no particular upper limit on the width of the article 22 relative to the recoater blade 66. After the powder 44 is deposited, a recoater blade 66 can be passed over the powder 44 to create a substantially even layer of powder with a particular thickness, for example about 50 microns, or about 30 microns, or about 20 microns. In certain embodiments, the thickness of a particular layer of powder may be substantially the same as an average diameter of the particles of powder 44 that are used to form the layer (e.g., a monolayer of powder 44).

In certain embodiments, the recoater portion 42 may be operated by the controller 12 based on force feedback control. In certain embodiments, a sensor of the recoater portion 42 may detect a force applied to the recoater blade 66. During the manufacturing process, when the expected force on the recoater blade 66 does not substantially match the detected force, then the controller 12 may modify operation of the powder gates to compensate for the difference. For instance, if a relatively thicker layer of powder is to be provided and the recoater blade 66 experiences a relatively low force, the controller 12 may determine that the powder gates are clogged and are dispensing powder at a lower rate than normal. Under these circumstances, the controller 12 can open the powder gates for a longer period of time to deposit sufficient powder. On the other hand, if the controller 12 determines that the recoater blade 66 is experiencing a relatively high force when the layer of powder provided is relatively thin, the controller 12 may determine that the powder gates are not being closed properly. Under these circumstances, it may be advantageous to pause the build cycle so that the AM system 10 can be diagnosed and repaired, so that the build may be continued without comprising quality of the article 22. In certain embodiments, the controller 12 may be communicatively coupled to a camera for monitoring the powder layer thickness. Based on the powder layer thickness, the controller 12 may control the operation of the powder gates to add more or less powder.

In addition, certain embodiments of the build unit 20 include the DLM/DLS portion 54 and have a controlled low-oxygen build environment with two or more gas zones to facilitate a low-oxygen environment to facilitate the DLM/DLS process. For example, as illustrated in FIG. 2, the first gas zone 96 is positioned immediately over the working surface 76. The second gas zone 100 is positioned above the first gas zone 96, and is isolated from the larger build environment by an enclosure 98. In the embodiment illustrated in FIG. 2, the first gas flow zone 96 is essentially the inner volume of the gas flow device 94 (e.g., the volume defined by the vertical (xz plane) surfaces of the inlet and outlet portions (95A and 95B)), and by extending imaginary surfaces from the respective upper and lower edges of the inlet portion to the upper and lower edges of the outlet portion in the xy plane. When the irradiation emission directing device 90 directs the beam 88, then the gas flow device 94 may provide a substantially laminar gas flow across the first gas zone 96. This facilitates removal of the effluent plume caused by laser melting. Accordingly, when a layer of powder is irradiated, smoke, condensates, and other impurities flow into the first gas flow zone, and are transferred away from the powder and the article being formed by the laminar gas flow. The smoke, condensates, and other impurities flow into the low-pressure gas outlet portion and are eventually collected in a filter, such as a HEPA filter. By maintaining laminar flow, the aforementioned smoke, condensates and other impurities can be efficiently removed while also rapidly cooling melt pool(s) created by the laser, without disturbing the powder layer, resulting in higher quality parts with improved metallurgical characteristics. In certain embodiments, the gas flow in the first gas flow zone is at about 3 meters per second, and the gas may flow in either the x or y direction.

Within the DLM/DLS portion 54 of the build unit 20, the oxygen content of the second gas zone 100 may generally be approximately equal to the oxygen content of the first gas zone 96, in certain embodiments. The oxygen content of both gas zones 96 and 100 is relatively low. For example, the oxygen content of gas zone 96 and/or 100 may be 1 % or less, or 0.5% or less, or 0.1 % or less. The non-oxygen gases may be any suitable gas for the process. For instance, nitrogen obtained by separating ambient air may be a convenient option for some applications. Some applications may use other gases, including inert gases, such as helium, neon, or argon. An advantage of the present approach is that it is much easier to maintain a low-oxygen environment in the relatively small volume of the first and second gas zones 96 and 100. In prior art systems and methods, the larger environment around the entire apparatus and article would be tightly controlled to have a relatively low-oxygen content, for instance 1 % or less, which can be time-consuming, expensive, and technically difficult. Therefore, for the disclosed build unit 20, the first and second gas zones 96 and 100 may be, for example, 100 times smaller in terms of volume than the build environment. For example, the first gas zone 96, and likewise the gas flow device 94, may have a largest xy cross sectional area that is smaller than the smallest cross sectional area of the article 22. There is no particular upper limit on the size of the article 22 relative to the first gas zone 96 and/or the gas flow device 94. Advantageously, the irradiation emission beam 88 fires through the first and second gas zones 96 and 100, which are relatively low-oxygen zones. When the first gas zone 96 is a laminar gas flow zone with substantially laminar gas flow, the irradiation emission beam 88 may possess a clearer line of sight to the article 22, due to the aforementioned efficient removal of smoke, condensates, and other contaminants or impurities.

One advantage of the present technique is that, in some embodiments, a build plate 105 of the AM system 10 may be vertically stationary (e.g., in the z direction). This permits the build plate 105 to support as much material as necessary, unlike the prior art methods and systems, which typically involve some mechanism to raise and lower the build plate, thus limiting the amount of material that can be used. Accordingly, the apparatus of the present technique is particularly suited for manufacturing an article 22 within a large (e.g., greater than 1 m³) build dynamic envelope 24. For instance, the dynamic build envelope may have a smallest xy cross sectional area greater than 500 mm², or greater than 750 mm², or greater than 1 m². The size of the dynamic build envelope 24 is not particularly limited. For instance, the dynamic build envelope 24 could have a smallest cross sectional area as large as 100 m². Likewise, the formed article 22 may have a largest xy cross sectional area that is no less than about 500 mm², or no less than about 750 mm², or no less than about 1 m². There is no particular upper limit on the size of the article 22. For example, the smallest xy cross sectional area of the article 22 may be as large as 100 m². Because the dynamic build envelope 24 retains unfused powder 44 about the article 22, it generally minimizes an amount of unfused powder used for a particular build, which is particularly advantageous for large builds. When building large articles 22 within the dynamic build envelope 24, it may be advantageous to build the envelope using a different build unit, or even a different build method altogether, than is used for the article. As discussed, the disclosed dynamic build envelope 24 is fabricated via BJ, which enables particular advantages, both in terms of recovering and recycling powder used to fabricate the build envelope and preventing powder from falling outside of the dynamic build envelope 24, as discussed below.

FIG. 5 is a cross-sectional diagram of an embodiment of a dynamic build envelope 24 that is fabricated using a BJ process, in accordance with present techniques. The dynamic build envelope 24 includes a number of retaining walls 52 formed using the aforementioned BJ portion 46 of the build unit 20 near the outer edges or the periphery 140 of the deposited layers of powder 142. As such, the dynamic build envelope 24 defines the outer edges of the build area 28 and contains the deposited layers of powder 142 within the retaining walls 52 to be selectively melted or sintered by the DLM/DLS portion 54 of the build unit 20, selectively bound using a binder deposited by the BJ portion 46 of the build unit 20, or a combination thereof.

As illustrated in FIG. 5, as the recoater portion 42 of the build unit 20 deposits powder near the periphery 140 of the build area 28, a portion of the powder may slip or spill over from the top of the retaining walls and begin to accumulate outside of the dynamic build envelope 24, near the bottom of the retaining walls 52. Since the spilled over powder 144 located outside of the dynamic build envelope 24 is not available for BJ or DLM/DLS, this spilled over powder 140 reduces the efficiency of the build process. However, it is presently recognized, by using a BJ process to fabricate the retaining walls, present embodiments of the build unit 20 and the AM system 10 can dramatically reduce or eliminate spilled over powder 144 from collecting outside of the dynamic build envelope 24.

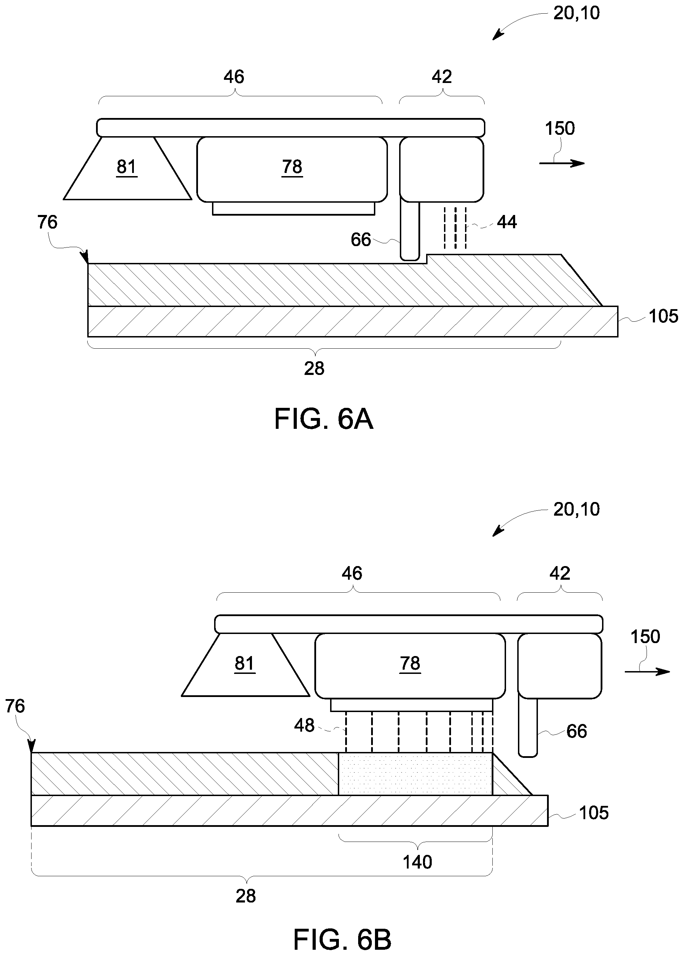

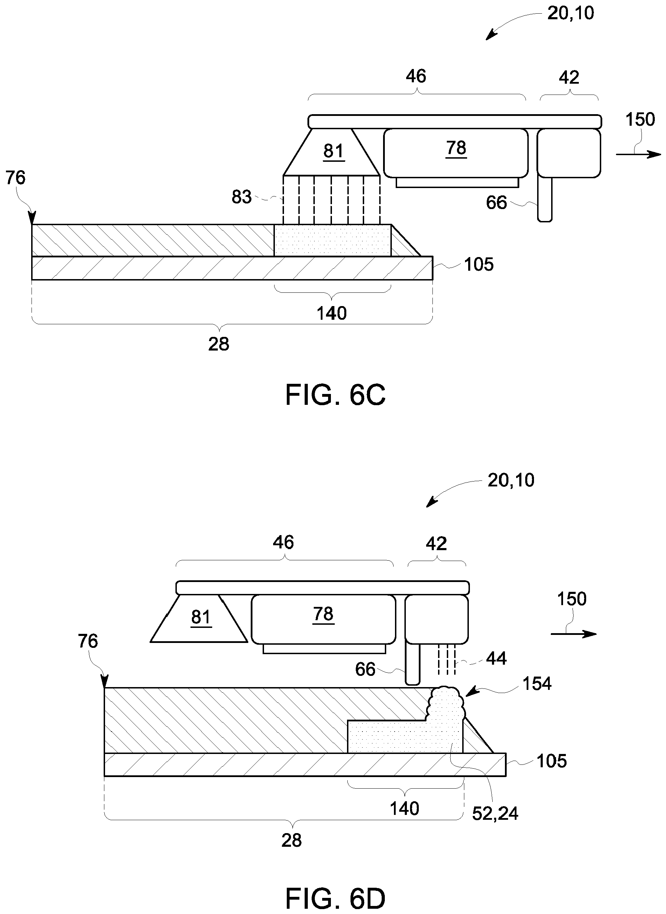

For example, FIGS. 6A, 6B, 6C, and 6D illustrate steps of an embodiment of a process for fabricating the dynamic, binder jetted build envelope 24 in a manner that substantially reduces powder from spilling over the build envelope 24 while an article (not shown) is being manufactured inside of the build envelope 24. The embodiment of the build unit 20 ofthe AM system 10 illustrated in FIGS. 6A-D includes the recoater portion 42 disposed adjacent to the BJ portion 46 of the build unit 20. As shown in FIG. 6A, as the build unit 20 moves over the build area 28, as indicated by the arrow 150, the recoater portion 42 deposits a layer of the powder 44 over a build plate 105, and the deposited layer of powder 44 is smoothed by the recoater blade 66 to yield a working surface 76 in the build area 28.

Turning to FIG. 6B, as the build unit 20 continues to move over the build area 38, print head 78 of the BJ portion 46 of the build unit 20 becomes aligned with the periphery 140 of the working surface 76, which is formed by the deposited layer of powder 44 in FIG. 6A. Once aligned, the print head 78 is selectively activated to deposit binder 48 onto the periphery 140 ofthe working surface 76. To reduce fabrication costs, in certain embodiments, the binder 48 deposited into the periphery 140 of the working surface 76 may be a different binder (e.g., a cheaper binder, a less-clean burning binder) than a binder used to form portions of the article within the dynamic build envelope 24. Additionally, the print head 78 may be selectively activated to oversaturate the periphery 140 of the working surface 76 with excess binder 48, such that a portion of the deposited binder 48 remains at the surface of the periphery 140 of the layer of powder 44 and does not completely absorb or permeate into the working surface 76. Turning to FIG. 6C, as the build unit 20 continues to move over the build area 38, the curing emission source 81 becomes aligned with the periphery 140 ofthe working surface 76 and irradiates the surface with light 83 to at least partially cure the deposited binder to form a portion of a retaining wall 52 of a dynamic build envelope 24 around the article being fabricated.

Turning to FIG. 6D, once the build unit 20 increases vertical height relative to the base plate 105, the recoater portion 42 deposits another layer of powder 44 to form a new working surface 76. However, since the print head 78 oversaturated the underlying layer, as illustrated in FIG. 6B, a portion of the previously deposited binder 48 seeps up through the new layer of powder 44 at the periphery 140 of the working surface 76, as indicated by the arrow 154 in FIG. 6D. The binder 44 that seeps up into the periphery 140 of the newly deposited layer of powder 44 helps to maintain the position of the new working surface 76 and reduce (e.g., block or prevent) deposited powder from spilling over the top of the retaining wall 52. As such, by using BJ to oversaturate the periphery 140 of the working surface 76, a greater amount of powder may be retained inside the dynamic build envelope 24, reducing powder waste and increasing the efficiency of the AM system 10.

Advantageously, since the retaining walls 52 of the build envelope 24 are dynamically built up around the article 22, the shape of the build envelope 24 can follow the shape of the article 22. The dynamic build envelope 24 may be advantageously close to the article, which reduces the size (e.g., total volume) of the dynamic build envelope 24. Further, it is recognized that smaller support structures are generally more stable and have greater structural integrity, resulting in a more robust process with less failure. For example, in one embodiment, two dynamic build envelopes 24 may be built, one concentric within the other, to fabricate articles in the shape of, for example, circles, ovals, and polygons. Additionally, by using BJ to dynamically form the dynamic build envelope 24, support structures (e.g., buttresses) may be advantageously built on the retaining walls 52 as needed, to support overhangs and other outwardly-built features of the article being fabricated. Therefore, the present approach enables the fabrication of dynamically constructed build envelopes 24 and articles 22 that would be either impossible or impractical using conventional technology.

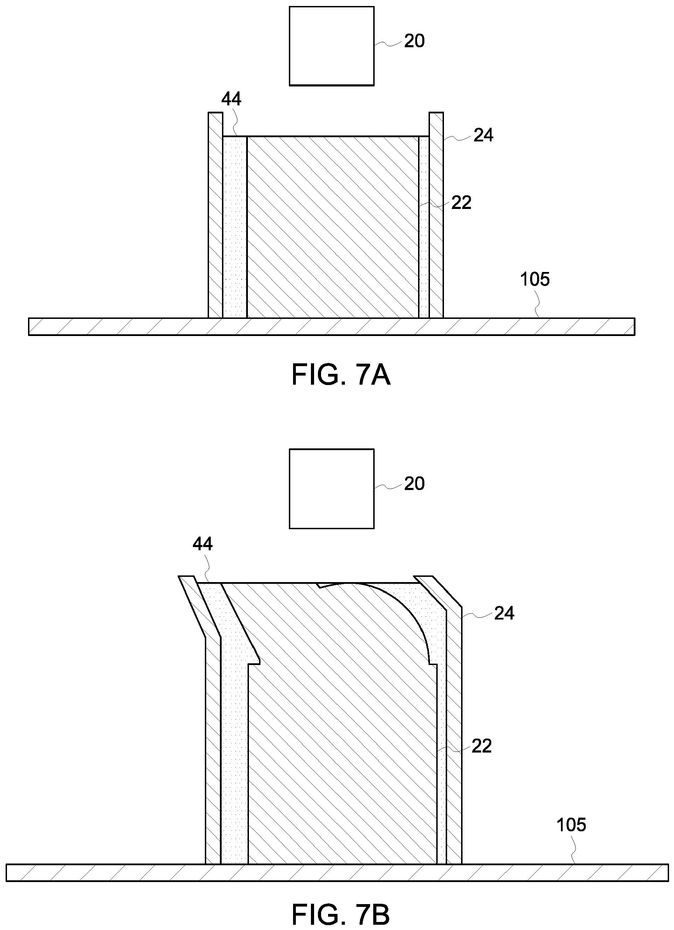

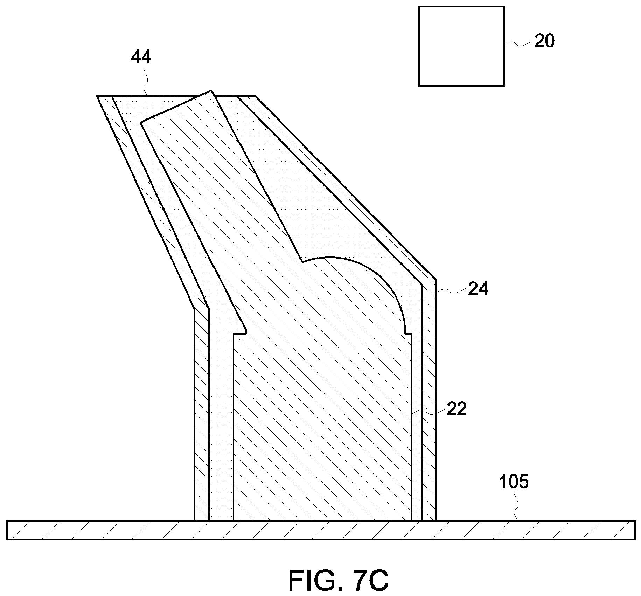

FIGS. 7A, 7B, and 7C illustrate steps of a process for fabricating the article using BJ or DLM/DLS, while fabricating the dynamic build envelope around the article using the BJ process, in accordance with present techniques. More specifically, FIGS. 7A-C illustrate an article 22 built vertically upward from powder 44 within a dynamic build envelope 24 on a vertically stationary build plate 105, according to an embodiment of the present technique. For these figures, the article 22 is built on the vertically stationary build plate 105 using a build unit 20. As mentioned, portions of the article 22 may be melted or sintered together (e.g., using the DLM/DLS portion 54 of the build unit 20 illustrated in FIG. 2), chemically bound together (e.g., using the BJ portion 46 of the build unit 20 illustrated in FIG. 2), or a combination thereof, while the retaining walls 52 of the dynamic build envelope 24 are chemically bound together (e.g., using the BJ portion 46 of the build unit 20 illustrated in FIG. 2). Since the build unit 20 may be capable of selectively dispensing powder 44 within the dynamic build envelope 24, the unfused deposited powder 44 is generally entirely within the dynamic build envelope 24, or at least a substantial portion of the unfused deposited powder 44 stays within the dynamic build envelope 24. As shown in FIGS. 7B and 7C, the build unit 20 may be gradually moved away from the article 24 to more easily access the article 24. Mobility of the of the build unit 20 maybe enabled by, for instance, the positioning system 18 discussed above.

Technical effects of the present technique include enabling the manufacture of AM systems that utilize BJ to enable fabrication of large-scale articles, such as 1 m³ in size, or larger. The disclosed AM systems enable the fabrication of larger articles by using BJ to at least fabricate retaining walls that define a dynamic build envelope around the article as it is printed. The article is fabricated inside the dynamic build envelope by selectively melting portions of the powder via a DLM/DLS process, or selectively binding portions of the powder via a BJ process, or a combination thereof. Further, present embodiments enable the deposition of a sufficient amount of binder to oversaturate the periphery of a deposited layer of powder, such that subsequently deposited powder at least partially adheres to the previously deposited binder, which substantially reduces the spillover of powder outside of the dynamic build envelope. Additionally, once fabrication of the article is completed, the retaining walls of the dynamic build envelope can undergo a debinding heat treatment to remove the binder and free the powder for recycling in a subsequent AM operation. As such, the disclosed AM systems enable higher efficiency, reduced waste, and greater freedom to utilize particular AM processes to construct different portions of the article.

This written description uses examples to disclose the preset technique, including the best mode, and also to enable any person skilled in the art to practice the disclosed technique, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following clauses
1. An additive manufacturing system for fabricating an article, comprising:
   a build unit; and
   a positioning system operably coupled to the build unit, wherein the positioning system is configured to move the build unit in at least three dimensions, and wherein the build unit comprises:
      a recoater portion configured to deposit a layer of powder within a build area of the additive manufacturing system; and
      a binder jetting (BJ) portion configured to selectively deposit and cure a binder within a periphery of the deposited layer of powder to form a dynamic build envelope around the article being fabricated in the build area.
2. The system of clause 1, wherein the BJ portion is configured to selectively deposit and cure the binder within a portion of the deposited layer of powder inside of the dynamic build envelope to form at least a portion of the article being fabricated in the build area.
3. The system of clause 1, wherein the BJ portion of the build unit comprises:
   a binder reservoir configured to store a binder; and
   a print head fluidly coupled with a binder reservoir, wherein the print head is configured to receive binder from the binder reservoir and to selectively deposit the binder within the periphery of the deposited layer of powder.
4. The system of clause 3, wherein the BJ portion of the build unit comprises:
   a curing emission source configured to irradiate the periphery of the deposited layer after the binder is deposited to cure the binder within the periphery of the deposited powder layer.
5. The system of clause 1, wherein the recoater portion of the build unit comprises a powder dispenser and a recoater blade or recoater roller.
6. The system of clause 1, wherein the recoater portion comprises multiple powder dispensers.
7. The system of clause 1, wherein the build unit comprises a direct laser melting or direct laser sintering (DLM/DLS) portion, comprising:
   an irradiation emission directing device configured to selectively direct a laser beam or an e-beam to melt or sinter a portion of the deposited layer of powder to form a portion of the article being fabricated; and
   a gas flow device configured to provide a reduced-oxygen atmosphere around the central portion of the deposited layer of powder during melting or sintering.
8. The system of clause 7, wherein the gas flow device is configured to provide a gas flow or a vacuum over the portion of the deposited layer of powder during melting or sintering.
9. The system of clause 1, comprising using a second build unit, wherein the second build unit comprises a direct laser melting or direct laser sintering (DLM/DLS) portion, comprising:
   an irradiation emission directing device configured to selectively direct a laser beam or an e-beam to melt or sinter a portion of the deposited layer of powder to form a portion of the article being fabricated; and
   a gas flow device configured to provide a reduced-oxygen atmosphere around the portion of the deposited layer of powder during melting or sintering.
10. The system of clause 1, wherein the three dimensions are x, y, and z coordinates, and wherein the build unit can be rotated in the x-y plane.
11. The system of clause 1, wherein the positioning system is configured to move the build unit within a volume that is at least ten times larger than the cube of the width of the recoater blade.
12. A method of additive manufacturing, comprising:
   moving, via a positioning system, a build unit across a build area;
   depositing, via a recoater portion of the build unit, a layer of powder while moving the build unit across the build area;
   selectively depositing, via a binder jetting portion of the build unit, a binder onto a periphery of the layer of powder while moving the build unit across the build area, wherein the binder is subsequently cured to form a portion of a dynamic build envelope in the periphery of the layer of powder; and
   fusing or binding a portion of the layer of powder to form a fused or bound layer of an article inside of the dynamic build envelope while moving the build unit across the build area.
13. The method of clause 12, wherein selectively depositing the binder comprises oversaturating the periphery of the layer of powder with excess binder such that a periphery of a subsequently deposited layer of powder is blocked from spilling over outside of the dynamic build envelope by the excess binder.
14. The method of clause 12, comprising irradiating the selectively deposited binder using an emission source to cure the binder and form the dynamic build envelope.
15. The method of clause 14, wherein the emission source is an infrared (IR), visible, or ultraviolet (UV) emission source of the binder jetting portion of the build unit.
16. The method of clause 14, wherein the emission source is a laser or e-beam of a direct laser melting or direct laser sintering (DLM/DLS) portion of the build unit.
17. The method of clause 12, wherein fusing or binding comprises fusing by irradiating, via a direct laser melting or direct laser sintering (DLM/DLS) portion of the build unit, the portion of the layer of powder using a laser or e-beam that melts or sinters the portion of the layer of powder into the fused layer of the article inside of the dynamic build envelope.
18. The method of clause 12, wherein fusing or binding comprises binding by depositing and curing, via the binder jetting portion of the build unit, a second binder within the portion of the layer of powder to form the bound layer of the article inside the dynamic build envelope.
19. The method of clause 18, wherein the binder is different from the second binder.
20. The method of clause 18, comprising heating the article to remove the second binder from within the portion of the layer of powder and to sinter the portion of the layer of powder into a consolidated article.
21. The method of clause 12, comprising:
   moving, via the positioning system, the build unit upward in a direction substantially normal to the working surface after fusing or binding the layer of powder;
   moving, via the positioning system, the build unit across the build area;
   depositing, via a recoater portion of the build unit, a second layer of powder while moving the build unit across the build area;
   selectively depositing, via the binder jetting portion of the build unit, the binder onto a periphery of the second layer of powder while moving the build unit across the build area, wherein the binder is subsequently cured to form a second portion of the dynamic build envelope in the periphery of the second layer of powder; and
   fusing or binding a portion of the second layer of powder to form a second fused or bound layer the article inside of the dynamic build envelope while moving the build unit across the build area.
22. The method of clause 12, wherein moving the build unit across the working surface comprises moving and rotating the build unit in an x-y plane.
23. The method of clause 12, comprising removing the article from the dynamic build envelope and debinding the dynamic build envelope to recover powder from the dynamic build envelope.
24. The method of clause 23, comprising recycling the recovered powder in a subsequent additive manufacturing process.
25. A build unit of an additive manufacturing system for fabricating an article, comprising:
   a recoater portion configured to deposit a layer of powder within a build area of the additive manufacturing system;
   a binder jetting portion configured to selectively deposit and cure a binder within a periphery of the deposited layer of powder to form a dynamic build envelope around the article being fabricated in the build area; and
   a direct laser melting or direct laser sintering (DLM/DLS) portion configured to selectively fuse a portion of the deposited layer of powder to form a fused layer of the article inside of the dynamic build envelope.

## Claims

1. An additive manufacturing system (10) for fabricating an article (22), comprising:
a build unit (20); and
a positioning system (18) operably coupled to the build unit, wherein the positioning system is configured to move the build unit in at least three dimensions, and wherein the build unit comprises:
a recoater portion (42) configured to deposit a layer of powder (50) within a build area of the additive manufacturing system; and
a binder jetting (BJ) portion (46) configured to selectively deposit and cure a binder (48) within a periphery (140) of the deposited layer of powder to form a dynamic build envelope (24) around the article being fabricated.

2. The system of claim 1, wherein the BJ portion is configured to selectively deposit and cure the binder (48) within a portion of the deposited layer of powder (50) inside of the dynamic build envelope (24) to form at least a portion of the article (22) being fabricated.

3. The system of claim 1 or 2, wherein the BJ portion (46) of the build unit (20) comprises:
a binder reservoir (80) configured to store the binder (48); and
a print head (78) fluidly coupled with a binder reservoir, wherein the print head is configured to receive the binder from the binder reservoir and to selectively deposit the binder within the periphery (140) of the deposited layer of powder (50).

4. The system of any one of claims 1 to 3, wherein the BJ portion (46) of the build unit (20) comprises:
a curing emission source (81) configured to irradiate the periphery of the deposited layer (50) after the binder (48) is deposited to cure the binder within the periphery of the deposited powder layer.

5. The system of any one of claims 1 to 4, wherein the recoater portion (42) of the build unit (20) comprises a powder dispenser and a recoater blade or recoater roller (66).

6. The system of any one of claims 1 to 5, wherein the recoater portion comprises multiple powder dispensers (56).

7. The system of any one of claims 1 to 6, wherein the build unit comprises a direct laser melting or direct laser sintering (DLM/DLS) portion (54), comprising:
an irradiation emission directing device (90) configured to selectively direct a laser beam or an e-beam (88) to melt or sinter a portion of the deposited layer of powder (50) to form a portion of the article (22) being fabricated; and
a gas flow device (94) configured to provide a reduced-oxygen atmosphere around a central portion of the deposited layer of powder during melting or sintering.

8. The system of claim 7, wherein the gas flow device (94) is configured to provide a gas flow or a vacuum over the portion of the deposited layer of powder (50) during melting or sintering.

9. The system of any one of claims 1 to 8, comprising a second build unit (26), wherein the second build unit comprises a direct laser melting or direct laser sintering (DLM/DLS) portion (54), comprising:
an irradiation emission directing device (90) configured to selectively direct a laser beam or an e-beam (88) to melt or sinter a portion of the deposited layer of powder (50) to form a portion of the article (22) being fabricated; and
a gas flow device (94) configured to provide a reduced-oxygen atmosphere around the portion of the deposited layer of powder during melting or sintering.

10. The system of any one of claims 1 to 9, wherein the three dimensions are x, y, and z coordinates, and wherein the build unit (20) can be rotated in the x-y plane.

11. The system of any one of claims 1 to 10, wherein the positioning system (18) is configured to move the build unit (20) within a volume that is at least ten times larger than the cube of a width of a recoater blade (66) of the recoater portion (42).

12. A method of additive manufacturing, comprising:
moving (150), via a positioning system (18), a build unit (20) across a build area (28);
depositing, via a recoater portion (42) of the build unit, a layer of powder (50) while moving the build unit across the build area;
selectively depositing, via a binder jetting portion (46) of the build unit, a binder (48) onto a periphery (140) of the layer of powder (50) while moving the build unit across the build area, wherein the binder is subsequently cured to form a portion of a dynamic build envelope (24) in the periphery of the layer of powder; and
fusing or binding a portion of the layer of powder (50) to form a fused or bound layer of an article (22) inside of the dynamic build envelope while moving the build unit across the build area.

13. The method of claim 12, wherein selectively depositing the binder comprises oversaturating the periphery (140) of the layer of powder (50) with excess binder such that a periphery of a subsequently deposited layer of powder is blocked from spilling over outside of the dynamic build envelope (24) by the excess binder.

14. The method of claim 12 or 13, comprising irradiating the selectively deposited binder using an emission source (81, 90) to cure the binder (48) and form the dynamic build envelope (24).

15. The method of claim 14, wherein the emission source (81) is an infrared (IR), visible, or ultraviolet (UV) curing emission source of the binder jetting portion (46) of the build unit (20).
